## Europäisches Patentamt
## European Patent Office
## Office européen des brevets

(11) Publication number: **0 102 677**
**B1**

# EUROPEAN PATENT SPECIFICATION

(45) Date of publication of patent specification: **28.10.87**

(51) Int. Cl.⁴: **G 01 H 9/00**

(21) Application number: **83201302.3**

(22) Date of filing: **23.03.81**

(80) Publication number of the earlier application in accordance with Art. 76 EPC: **0 037 668**

(54) Optical transducer means.

(30) Priority: **24.03.80 US 133171**

(43) Date of publication of application:
**14.03.84 Bulletin 84/11**

(45) Publication of the grant of the patent:
**28.10.87 Bulletin 87/44**

(84) Designated Contracting States:
**DE FR GB IT**

(73) Proprietor: **SPERRY CORPORATION**
**1290, Avenue of the Americas**
**New York, N.Y. 10019 (US)**

(72) Inventor: **McMahon, Donald Howland**
**Judy Farm Road**
**Carlisle Massachusetts 01741 (US)**

(74) Representative: **Singleton, Jeffrey**
**ERIC POTTER & CLARKSON 27 South Street**
**Reading Berkshire, RG1 4QU (GB)**

(56) References cited:
FR-A-2 410 255
FR-A-2 427 584
GB-A-2 054 135

NAVY TECHNICAL DISCLOSURE BULLETIN,
vol. 4, no. 7, July 1979, pages 9-12; T.Y.WU:
"Fiber optical pressure transducer"

JOURNAL OF THE ACOUSTICAL SOCIETY OF
AMERICA, vol. 34, 1962, pages 1661-1662, New
York, US; E.T.O'NEILL: "Pressure-balanced
high pressure hydrophone"

(56) References cited:
APPLIED OPTICS, vol. 20, no. 6, 15th March
1981, pages 915-916, New York, US;
A.R.NELSON et al.: "Passive multiplexing of
digital fiber-optics sensors"

# 0 102 677

**Description**

This invention relates to optical transducer means and, more particularly, to transducer means adapted to convert small displacements into variations of light intensity and thence into corresponding electrical current variations.

Prior art optical transducers, especially of the kind found useful in the past for converting the small deflections associated with sound signals present in a liquid medium into electrical signals, are generally discussed in European Patent Application No. 80302655.8, published as EP—A1—24831 the inventor of which is R. L. Gravel.

The Gravel fibre optic transducer includes two optical fibres each cut to have end faces substantially perpendicular to an axis and positioned with a small gap between the end faces of the fibres. One fibre is mounted to maintain its end face stationary, for example, while the other is cantilevered to permit displacement of its end face. When the fibre axes lie on a common straight line, light propagating in one fibre will be coupled with maximum intensity into the other fibre.

An acousto-optic transducer may be constructed in accordance with the Gravel invention by extending an optical fibre between two mounting structures disposed upon a base plate, mounting the fibre under tension to orient the axis along a straight line, bonding the fibre to both mounting structures to maintain the axis orientation thereafter, and cutting the fibre near the end of one mounting structure to obtain two fibres, one mounted to maintain its end face stationary and the other cantilevered to permit transverse displacement of its end face.

It will be clear to those skilled in the art that the displacement sensitivity of the Gravel transducer is governed by the diameter of the core of the optical wave guide. For example, if the free end of the long fibre is caused to vibrate, the light transmitted into and through the associated fixed short fibre varies from one hundred per cent when the fibre axes are accurately alinged to zero when one fibre guide is displaced transversely by a distance equal to the core diameter. To obtain maximum pressure sensitivity, the axes of the cooperating fibres may be offset to approximately the fifty per cent transmission condition at the prevailing static pressure value.

The Gravel device, when used with a conventional photo-detector-amplifier circuit in a sonar detector, desirably has a sensitivity at least equal to the sea noise ambient and insensitivity to pressure head variation, that is, the Gravel technique is not limited in sensitivity by the phase noise problem that conventionally plagues the interfero-metric single-mode sensing technique, but is limited only by the fundamentally irreducible electron shot noise characteristics of the photo-detector. Many other optical intensity modulation schemes are undesirably sensitive to pressure head changes.

While the prior art fibre optic approach is preferably selected in certain applications wherein displacement transducers are required, single mode fibre guides are necessary to achieve reasonable sensitivity. Also, the adjustment of the positions of the cooperating fibre ends is relatively critical in three dimensions. Means must be provided for making these adjustments, each of which calls for a tolerance of about one micron; while they may be relatively simple mechanically, there must be precise adjustments in three dimensions for each fibre, invariably adding to the cost of the transducer.

Another form of optical transducer is shown in European Patent Specification No. 0,005,798 wherein a single optical fibre is attached by an index matched material to an optical plate carrying a grating and movable relative to a further optical plate also carrying a grating and having a reflective backing. Light is transmitted from the fibre, through the two gratings and is reflected back along the same path into the fibre, the light being modulated according to the relative dispositions of the two gratings.

Yet another form of optical transducer is disclosed in the IEEE Publication 79CH 1476-1 AES entitled "EASCON '79 RECORD". On page 576 of this publication there is shown in Figure 7 a moving grating sensor in which two co-axial optical fibres are held stationary with their facing ends spaced apart. In the gap between the facing ends of the optical fibres there are disposed two gratings one of which is movable and the other of which is held stationary, the movable grating being coupled to a diaphragm which is responsive to pressure variation to be sensed by the transducer.

Other forms of optical transducers are disclosed in FR—A—2 410 255 and FR—A—2 427 584.

According to one aspect of the present invention there is provided on optical transducer an optical transducer including mounting means, pressure sensing means coupled to the mounting means, and at least first and second optical waveguide means of circular cross-sections of diameter f and having side-by-side parallel axes, and first and second coplanar ends perpendicular to the axes, modulation means coupled to the pressure sensing means for amplitude modulating optical signals propagating through the ends of the at least first and second optical waveguide means in accordance with pressure applied to the pressure sensing means, and means coupled to the at least first and second optical waveguide means for receiving the amplitude modulated light signals, characterised in that the modulation means includes reflective grating array means having a plurality of reflective stripes each having a width d and spaced apart by an absorptive stripe also of width d, the reflective and absorptive stripes of the grating array means being offset by an angle B given by

$$B = d/2f$$

the reflective grating array means being affixed to the mounting means and spaced in parallel relationship

2

with the coplanar ends to form a gap, and in that the modulation means further includes grating means interposed within the gap and having a plurality of absorptive stripes and a substantially similar plurality of transparent stripes, the absorptive and transparent stripes of the array means each having the same width d, arranged to form an alternating pattern of absorptive and transparent stripes, and being offset by the angle B.

According to another aspect of the present invention there is provided an optical transducer including mounting means and pressure sensing means coupled to the mounting means, an optical waveguide disposed on the mounting means and having a diameter f and an end, substrate means positioned opposite to the end of the optical waveguide and parallel thereto to form a gap therebetween, first grating array means interposed within the gap adjacent the optical waveguide, reflective grating array means affixed to the surface of the substrate means opposite the end of the at least one optical waveguide, second grating array means affixed to the reflective grating array means, suspension means coupled to the pressure sensing means and adapted to permit relative displacement between the first and second grating means, source means for coupling light into the optical waveguide, characterised in that the first and second grating array means include a plurality of absorptive stripes and a substantially similar plurality of transpranent stripes, and absorptive and transparent stripes each having the same width d, and arranged to form an alternating pattern of absorptive and transparent stripes, the transparent and absorptive stripes being offset by an angle B given by

$$B=d/2f,$$

in that the reflective grating array means has a plurality of reflective stripes each spaced apart by an absorptive stripe, the reflective and absorptive stripes having the same width d and being offset by the angle B, in that the source means including light source means for providing substantially monochromatic radiation at first and second separated wavelengths, and in that branching optical waveguide means are provided for receiving reflected light amplitude modulated as a function of the displacement.

Optical transducers will now be described, by way of example, with reference to the accompanying drawings, in which:—

Figure 1, is an elevation, partially in cross-section, of one embodiment of transducer means not concerned with the present invention.

Figure 2 is a fragmentary view in cross-section of a portion of Figure 1,

Figure 3 is a diagrammatic representation useful in explaining the operation of the transducer means of Figure 1,

Figures 4, 5 and 6 are generally similar to Figure 2, but show variations of the structure of Figure 2, but again not concerned with the present invention,

Figures 7 and 7A illustrate further variations of the structures shown in Figures 2 and 5, but again not concerned with the present invention,

Figure 8 is an elevation, partially in cross-section, of a variation of part of the transducer means of Figure 1, but again not concerned with the present invention,

Figure 9 is a simplified elevation view of an alternative of the transducer means of Figure 1, but again not concerned with the present invention,

Figure 10 is a face view of ends of fibre optic waveguides showing the disposition of co-operating stripe arrays, being in accordance with the present invention when reflective gratings are employed as in Figures 11 to 14,

Figure 11 represents a plan view of a reflective variant of the transducer means of Figures 1 and 8, in accordance with the present invention,

Figure 12 is an elevation, partially in cross-section of part of Figure 11,

Figure 12A is a view similar to the right-hand end portion of Figure 12, but illustrating an alternative embodiment, wherein optical fibres are held stationary while the gratings may be moved with respect thereto, in accordance with the present invention,

Figure 13 is a fragmentary view of an alternative of Figures 11 and 12, again in accordance with the present invention,

Figure 14 is a plan view of a variant of the embodiment of Figure 11, again in accordance with the present invention,

Figure 15 is a wiring diagram of a data processing system for use with the transducer means of Figure 14,

Figure 16 is a fragmentary view of a form of the transducer means in accordance with the present invention using two colours of light, and

Figure 17 is a view of optical elements co-operating with the apparatus of Figure 16.

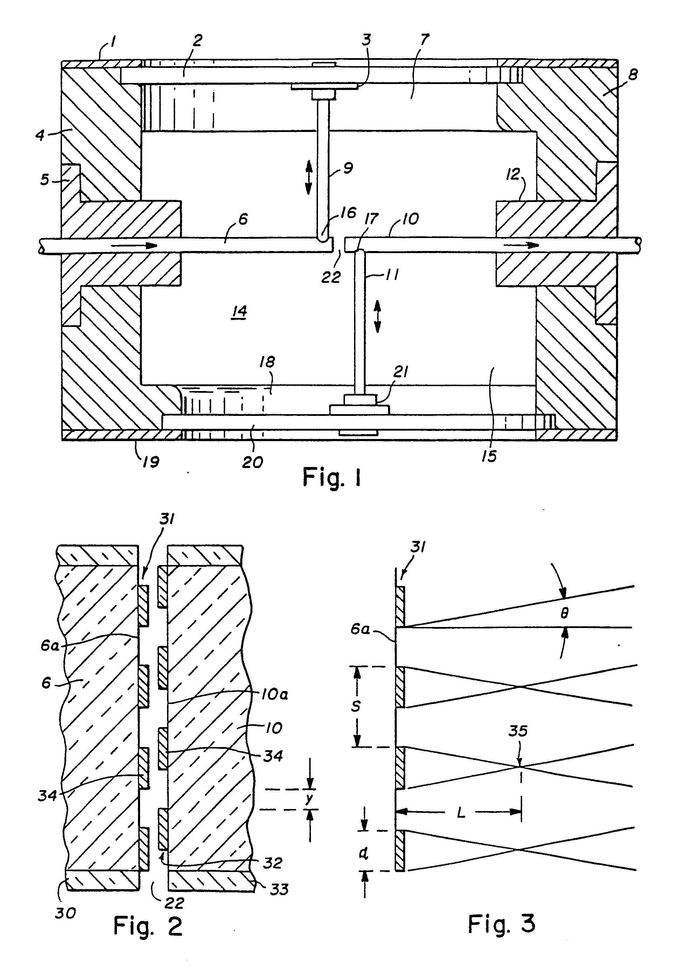

A first embodiment of the disclosure will be discussed with respect to Figures 1, 2, and 3 which show mounting means which may take the form of a closed casing including flat opposed end walls 4 and 8 and a pair of similar flat opposed side walls of which only wall 15 is seen in Figure 1. Closure of the internal cavity 14 is completed by opposed parallel flexible circular pressure-responsive diaphragms 2 and 20 disposed in respective extensions 7 and 18 of end walls 4, 8 and affixed therein by the respective generally ring-shaped clamps 1 and 19. The clamps 1, 19 may be bonded to extensions 7, 18 by a suitable adhesive material or by conventional threaded fasteners (not shown) for holding the peripheries of diaphragms 2, 20.

Centrally in the end wall 4 is disposed a metal ferrule 5 and an optical fibre guide 6 extending therethrough and normally ending near the centre of cavity 14, which cavity may contain a conventional damping fluid. The center of the diaphragm 2 is attached by a fastener 3 to a stiff translatable rod 9 fastened at a juncture 16 by a suitable adhesive to a point adjacent the inner end of the optical fibre guide 6. The fibre guide 6 may have a round cross-section or, since it is normally intended to move radially in the plane of Figure 1, may be square or rectangular in cross section. The guide 6 normally operates as the optical fibre light input to the transducer means.

In a similar manner, a fibre guide 10 serving as a light output is mounted within a ferrule 12 opposite the ferrule 5, the guide 10 extending inwardly of the cavity 14 and normally ending near the middle of that cavity. In their quiescent state, the optical fibre guides 6, 10 are aligned along a common axis with a short gap 22 formed between their inner ends. The centre of the diaphragm 20 is attached by a fastener 21 to a stiff translatable rod 11 fastened at a juncture 17 by adhesive to a point adjacent the inner end of the optical fibre 10. The relative deviation of the respective ends of the fibre guides 6, 10 depends upon the relative inward or outward motions of the respective diaphragms 2, 20 and the consequent relative radial motions of the linking rods 9, 11. If the transducer device were used, for example, as a hydrophone just beneath the surface of a body of water, an impulse compression wave having a component propagating upwardly in Figure 1 would ideally first actuate the diaphragm 20 and the link rod 11 to move the fibre guide 10 first up, then down. Having a wave length normally large in comparison with any dimension of the apparatus, the compression wave would amost simultaneously actuate the diaphragm 2 and the link rod 9 to move the fibre guide 6 first down, then up. Further damped motions of the ends of each fibre guide 6, 10 may be caused depending upon the parameters of the system, as will be appreciated by those skilled in the art. Small motions are assumed.

It is intended that the normally steady flow of light through the input fibre guide 6, the gap 22, and the output fibre guide 10 will be modulated according to the relative displacement of the ends of the fibre optic light guides 6, 10 at the gap 22 so as to convey output information via the guide 10 for evaluation by available data processing means or for recording or for visual display in a conventional manner, for example. A novel optical displacement pick-off device may be employed within the gap 22 for generating the desired amplitude modulated output light signal and one form this pick-off device is illustrated in Figure 2. It will be understood that the pick-off device is versatile and may be used to measure any of various parameters that may readily be converted into small displacements of a movable element with respect to a fixed index or, as in the apparatus of Figure 1, small relatively motions between two movable elements.

Referring to Figures 2 and 3, the facing ends 6a, 10a of the fibre guides 6, 10 and claddings 30, 33 at the gap 22 may be constructed by the general method disclosed in the aforementioned European Patent Application No. EP—A1—24831. Other methods of construction will be apparent to those skilled in the fibre optical guide art. It is arranged that the ends 6a, 10a of the optical fibres at the gap 22 are optically polished to make the facing ends 6a, 10a substantially perpendicular to the common quiescent axis of the fibre guides 6, 10. The fibre guides, 6, 10 are constituted by large core, large numerical aperture, multimode fibres. The preferred fibres are graded refractive index fibres wherein the optical index of refraction decreases as a function of the radial distance from the centre of the fibre guide so as to avoid the adverse effects of pulse dispersion. Such multimode fibre guides are used because they are compatible with the geometry of available light emitting diodes that are preferred light sources for use in propagating substantially monochromatic light into the input fibre guide 6. Additionally, connectors for use with multimode fibre guides are readily available commercially, while connectors for single mode guides are not widely available and will probably remain excessively expensive. Furthermore, the larger faces of the fibre core ends 6a, 10a more readily accommodate the optical pick-off device, permitting a preferred scale factor to be employed.

The pick-off system of Figures 2, 3 employs a technique wherein the positional sensitivity of the system is dependent only on the parameters of the pick-off system and is desirably independent of the fibre guide core diameter. In Figure 2, the opposed fibre ends 6a, 10a are provided with regular arrays 31, 32 of alternating transparent and opaque or absorbing stripes of substantially equal width. The opaque array elements, such as stripe 34, are formed of an opaque material such as a metal deposited through a mask. Other conventional methods, including photolithographic methods, may be employed. The stripes 34 deposited on each fibre end are mutually parallel, but the arrays are displaced (vertically in Figure 2) by a distance equal to a quarter of the line-to-line spacing S (Figure 3) of the stripes. While only four stripes are illustrated in Figure 2 for each array 31, 32, it will be understood that many more stripes are used in practice.

If the fibre guide 6 in Figure 2 is moved upwards by the small distance S/4, the opaque portions of the arrays 31 and 32 and the individual stripes 34 within them precisely overlap. Accordingly, half of the light propagating in the input fibre guide 6 passes through the gap 22 to be transmitted into or through the fibre guide 10. On the other hand, if the end 10a of the output fibre guide 10 is moved upwards by a distance S/4, the opaque stripe arrays are precisely interleaved so that substantially no light from the input fibre guide 6 reaches the output fibre guide 10.

From the geometry of Figure 2, it will be clear that, ignoring diffraction effects, the pick-off device is characterised by a minimum loss of 3 dB. For a relatively fine array with a small value of S, light diffraction induces an addition loss by converting light entering the output fibre guide 10 into radiated modes. For

4

preferred arrangements, the radiative losses may be neglected, so that a transverse relative displacement of S/2 causes the maximum change in output signal. By way of example, if S/2 is one micron, the positional sensitivity is 2.5 times as great as that achieved by the smallest available core, single-mode fibre of the aforementioned Gravel apparatus.

It will now be clear that the sensitivity of the pick-off device is completely independent of core diameter. It will also be apparent that the transverse positioning tolerances of the fibre guide are relaxed, facilitating ease of manufacture. Simple arguments indicate that widths of the deposited stripes 34 as small as about two microns may usefully and reasonably be achieved. Assuming stripe widths large compared with the wave length of light and therefore that diffraction effects are small, Figure 3 depicts the spreading of light from the fibre guide 6 after passing through its associated array 31. The half spreading angle θ in radians is then for all practical purposes equal to the numerical aperture of the fibre guide 6. For an array 31 of opaque and clear of transparent stripes of width S/2, the umbra length L is S/4θ. If θ is 0.2 and S/2 is one micron, then L is 2.5 microns. Hence, the spacing between the fibre ends 6a, 10a must be well under 2.5 microns in order to approach the full modulation capability. To achieve such a close spacing, the ends of a 200 micron fibre guide must be polished perpendicular to the fibre axis with an accuracy better than one degree and polished flat to an accuracy better than one half a wave length of the operating light. For values of S large compared with one micron, device tolerances scale directly with the magnitude of the factor S. For values of S comparable to or smaller than the wave length of light, device tolerances scale quadratically with the magnitude of S, so that devices having S values less than two microns will be difficult to realise.

Diffraction limitations also depend upon the factor S. In terms of diffraction theory, the line spacing S creates multiple diffraction orders spaced in angle by λ/S. When S is two microns and λ is 0.8 microns, the diffraction spreading angle is 0.4 radians; i.e., about twice that of the numerical aperture spreading. It is therefore again apparent that devices having stripes spacings less than two microns are relatively difficult to implement. It is seen that both geometric and diffraction aspects of the pick-off device limit S values to be greater than about two microns.

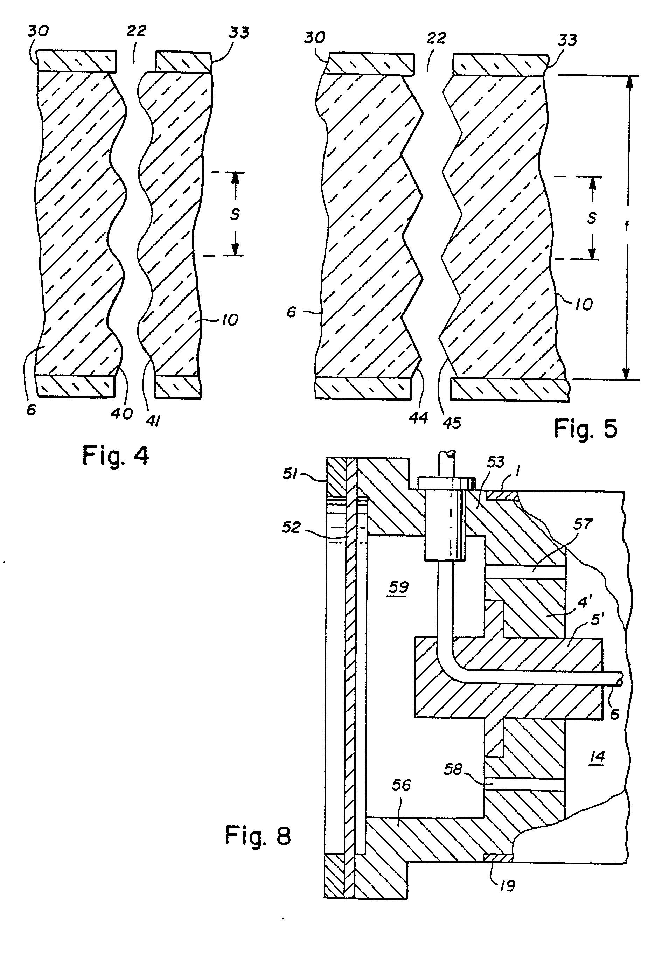

A further embodiment of the invention allows one to overcome the inherent limitations of the Figure 2 device which cause half the input light to be wasted by absorption and which may cause another significant fraction of the input light to be diffracted into radiating modes and thus be lost. In this embodiment, which is shown in Figure 4, the amplitude modulating arrays 31, 32 of the absorbing stripes 34 are replaced by what is defined herein as phase grating arrays 40, 41. The phase gratings may be deposited by conventional means on the opposed end faces of the guides 6, 10 or, as suggested by observation of Figure 4, may be formed by an appropriately shaped scribe moved by a conventional ruling engine across the fibre end faces. Other methods will be apparent to those skilled in the art. In Figure 4, the phase gratings each form a regular sinusoidal or corrugated surface, the corrugations of the array 40 of the fibre guide 6 being displaced vertically in the figure by S/4 with respect to the corrugations of the array 41 of the fibre guide 10.

Assume in Figure 4 that the light propagating through the thickest part of either phase grating suffers a phase retardation of 90° relative to light that traverses the thinnest portions. Furthermore, assume for simplicity that the fibre corrugated ends are themselves very closely spaced so that changes in light direction caused by refraction or diffraction can be ignored. If the corrugated end of the fibre guide 6 is moved downwards in the figure by S/4, the combined retardation of both phase gratings cancels so that there can be no net refraction or diffraction of light to alter the direction of light as it passes from the fibre guide 6 into the fibre guide 10. In this case, substantially all light carried out by the fibre guide 6 will enter and travel into the fibre guide 10. If the corrugated end of the fibre guide 10 is moved upwards in the figure by S/4, a total relative phase retardation of 180° will result between the thickest and thinnest portions of the phase gratings. The net result is that substantially all light is diffracted out of the zero diffraction order into the ±1 and higher diffraction orders. With S equal to two microns, the diffraction angle of 0.4 radians takes all light out of the low loss fibre guide modes and places it in the high loss, radiating modes. Hence, for this second case, substantially no light can pass from the fibre guide 6 into the fibre guide 10. It will be apparent that other configurations approximating to the corrugated surfaces of Figure 4 may be used to achieve substantially the same results. For example, surfaces such as the arrays 44 and 45 in Figure 5 made up of a regular succession of long transparent roof prisms may be employed, the roof apices of the array 44 being displaced by S/4 with respect to the roof apices of the array 45.

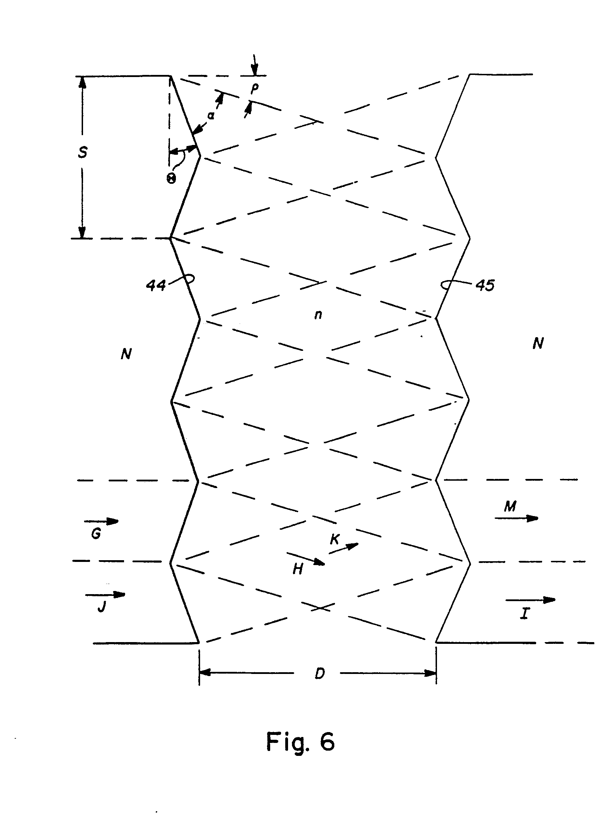

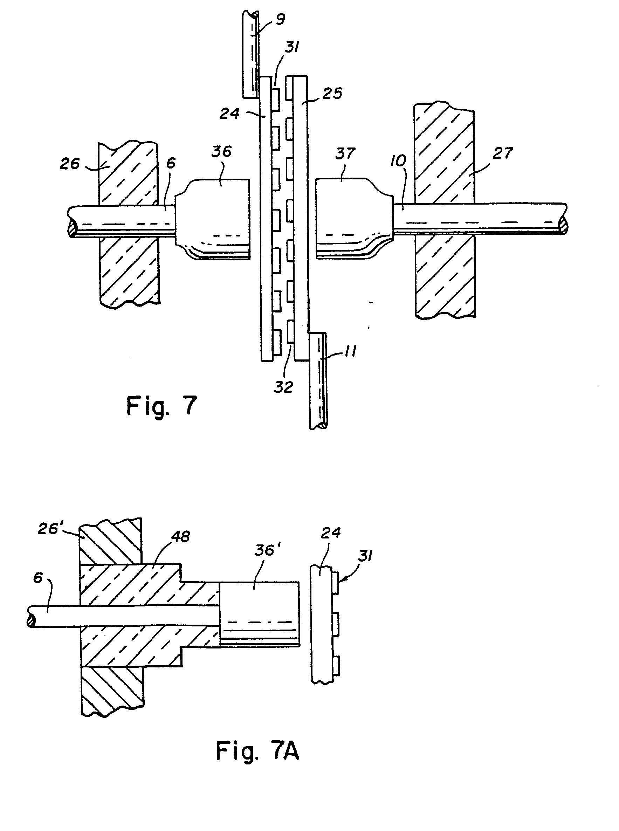

It will be instructive to examine Figure 6 in order to obtain a more complete understanding of devices such as those of Figures 4 and 5; it should be observed that this understanding will be useful with respect to applications of amplitude and phase gratings in configurations yet to be discussed in connection with Figures 7, 7A. In Figure 6, light normally incident from the left on the corrugated face of the phase grating array 44 will be refracted up or down through an angle ρ depending upon the slope of the grating facet upon which it is incident. For example, a light bundle G will be refracted down as at H and will form bundle I upon traversing the corrugated face of the grating array 45. On the other hand, a light bundle J will be refracted upwardly as at K to form bundle M upon passing through the corrugated face of the grating array 45. The bundles G and J have, in effect, changed places. If the slope of each facet is Θ with respect to normal incidence, if N is the index of refraction of the material of the grating arrays 44, 45, and if n is the relatively lower index of refraction of the medium between the grating arrays 44, 45, then the angle ρ is determined by:

$$N \sin\Theta = n \sin (\rho + \Theta) \qquad (1)$$

In order to obtain one hundred per cent modulation of the light as one grating is moved up or down relative to the other, the separation D between the grating arrays 44, 45 must be an integral multiple of the distance S defined by:

$$D = S \, \rho/2 \qquad (2)$$

for small values of $\Theta$. For light with a numerical aperture cone of $\pm 0.01$ radians, the distance D can approach a value one hundred times greater than S (neglecting minor diffraction effects). For example, if S<0.001 cm., D could be 0.01 cm. and 90 percent modulation would readily be attained as one grating is displaced relative to the other. It is seen that the important feature of the phase grating concept of Figure 5 lies in the fact that the maximum theoretical lightflow through the sensor is one hundred per cent as opposed to a maximum light flow only half as great for the absorption type of grating of Figure 2. The lower optical loss improves the sensor sensitivity by 3 dB. Although theoretically more complex, the sinusoidal phase grating arrays of Figure 4 and other such devices likewise have fixed grating separations that yield optimum sensitivity with intermediate separations having zero sensitivity.

A further embodiment of the invention appears in Figure 7; here, the fibre optical input and output guides 6 and 10 are rigid elements affixed in spaced opposition within respective walls 26, 27 which may be similar to the walls 4, 8 of Figure 1. Parallel transparent thin plates 24, 25 are disposed within the instrument, and are independently movable in a vertical sense, for example, being supported also by vertically movable rods 9, 11. The plates 24, 25 may constrained to move in parallel vertical paths by the use of any well known parallel motion mechanism (not shown).

Decollimating lenses 36 and collimating lenses 37 are affixed to the adjacent ends of the optical fibre guides 6 and 10 and are beneficial for use in the preferred forms of the invention wherein the grating arrays are affixed to parallel movable plates 24, 25. Such collimating and decollimating lenses, particularly designed for use with optical fibre light guides, are widely described in technical literature, including U.S. Patent Application Serial No. 13,095, filed February 21, 1979, and U.S. Patent No. 3,894,789 to Kobayashi et al. The selected lens preferably has three features for use in the present emobdiment; the lens length is a fourth of the wave guide pitch so as to image the fibre core source at infinity, the lens numerical aperture is greater than the core numerical aperture, and the lens outside diameter exceeds the fibre cladding diameter. Also of interest are the arrangements of the Holzmann U.S. Patent No. 4,119,362 and of the paper "Microlenses for Coupling Junction Lasers to Optical Fibres", *Applied Optics*, January 1974, page 89, by L. G. Cohen et al. Other conventional devices may be employed. Suitable devices may be purchased under the trade-name Selfoc from the Nippon Sheet Glass Company, 3, New England Executive Park, Burlington, Massachusetts, U.S.A. In the modification of Figure 7A, the collimating lens 36' is supported at least in part by a ferrule 48 extending through a wall 26' generally similar to the wall 26 of Figure 7, the input fibre guide 6 extending through the ferrule 48. A similar ferrule arrangement and lens (identified herein as 37' but not shown in the drawings) would be used in association with the output fibre guide 10. One or both grating arrays 31, 32 may be movable.

The use of lenses such as lenses 36, 37, 36', 37' is of particular benefit in the embodiments of Figures 7 and 7A. The lens 36 reduces the numerical aperture in one example from $\pm 0.2$ radians for a $10^{-2}$ centimetre diameter fibre guide to about $\pm 0.10$ radians. This reduction in the angular spread of light emitted by the guide 6 conveniently allows a spacing as large as several centimetres between the adjacent ends of the graded index lenses 36, 37 without introducing a significant additional light loss, thereby providing improved sensitivity for the device. The large spacing is particularly beneficial because it allows the opposed grating arrays 31, 32 to be fabricated separately on the respective plates 24, 25 and assembled into the casing entirely apart from the fabrication of the fibre optical system itself. The spacing D between the opposed grating arrays 31, 32 in the device of Figure 7 is no longer limited by the nature of the fibre numerical aperture to very small values. Large separations D are desirable both for coarse absorption gratings and for all phase gratings of the general type shown in Figures 4 and 5.

In this manner, optical fibre wave guide grating sensors are provided that detect motions small compared with the fibre core diameter; the grating sensor arrays may be attached to both fibre ends or to only one such end with the second grating fixed to the instrument casing. At least one of the gratings must be acted upon by the sonic or other disturbance to be monitored, such as a sound wave impacting a hydrophone, so as to cause a transverse motion of one grating relative to another whether or not physically coupled to a fibre end. Two fibre ends or two gratings are placed so that the relative small motions of the two grating arrays cause amplitude modulation of the amount of light transmitted from one fibre to the other. The gratings cause intensity or phase modulation of the light beam and may consist of stripe arrays, checkerboard patterns, or of other patterns having spacings substantially smaller than the diameter of the fibres.

Although not sensitive to acceleration, the device of Figure 1, for instance, cannot distinguish between acoustic waves and pressure head applied to the instrument. It is therefore an object of the embodiments now to be discussed to provide a fibre optical hydrophone, for example, that is sensitive to acoustic pressure variations but not to pressure heads applied to the instrument and that is relatively non-responsive to flow noise. Wide ranges of pressure effects such as the effect of tides, ocean waves, and working depth variations may prevent universal use of apparatus like that of Figure 1. Analysis shows that in wide ranges instruments, there is a conflict between factors yielding sufficient sensitivity to detect weak acoustic signals and the required insensitivity to large but slow pressure head variations. For maximum sensitivity, the greatest possible flexing of the diaphragms 2 of Figure 1 for the least possible change in pressure is desired. On the other hand, to maintain the device operation within its linear range, displacements caused by the perssure head changes must be less than one grating stripe width.

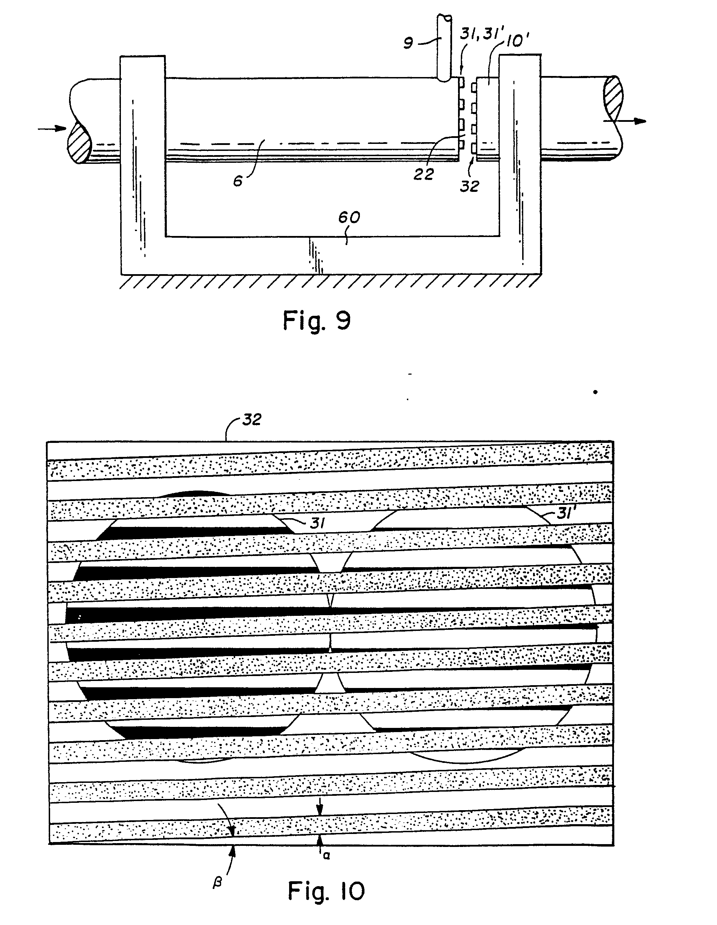

The modification of Figure 1 shown in Figure 8 acts to achieve the desired mechanism for relief of the pressure head variation problem. In Figure 8, the original cavity 14 and its associated parts are the same as those of Figure 1. The centrally located ferrule 5' extending through end wall 4' into a further cavity 59 permits the light guide 6 to leave the cavity 59, the wall 4' being extended by a wall 53 forming part of an enclosure about the further cavity 59. The cavity 59 is completed by a flexible diaphragm 52 exposed to the medium in which the hydrophone is operated and fastened to the wall 53 by a ring-shaped clamp 51. Two or more small bores 57, 58 extend through the wall 4' to connect the cavity 59 to the cavity 14. A suitable damping fluid fills the cavities 14, 59 and bores 57, 58.

The pressure head relief mechanism formed within the cavity 59 has a time constant quite long with respect to the lowest frequency to be detected by the diaphragms 2, 20, making use of the more compliant membrane 52 attached at its periphery by the clamp 51 to the casing wall 53. If the pressure head outside the instrument increases, the unequal pressures on the sides of the diaphragm 52 force fluid from the cavity 59 through the bores 57, 58 into the cavity 14, thereby relieving the pressure head differential on the several diaphragms. The size of the bores 57, 58 and the volumes of the cavities 14 and 49 are so selected as to create a suitable time constant (0.1 to 10 seconds) for relief of the undesired pressure head effect within the cavity 14. While the pressure head mechanism may not always completely null out pressure head changes, it does so to a sufficient degree for many purposes. The use of the closed dual cavities and the inert damping liquid they contain prevents corrosion of the interior of the instrument by the exterior medium.

For greater versatility, a further embodiment of the invention deserves attention; such an embodiment maintains sensitivity even though the linear range of a simple transducer like that of Figure 2 is exceeded. Since sensitivity is measured over large displacements, assembly tolerances are greatly eased. In the Figure 9 device, which is drawn in exaggerated proportions, a mounting clamp 60 holds fixed the grating array 32 at the end of output fibre guide 10', while it clamps the input fibre guide 6 at a location remote from the link rod 9 and remove from the input grating array 31 near the gap 22. It is readily seen that the amplitude of light traversing the gap 22 into the fixed output fibre guide 10' may be a function of a $1 + \sin(\pi y/d)$, where y is the relative displacement between the patterns of the gratings 31, 32 and $d$ is the width of one opaque stripe or of one transparent stripe of the grating. It will furthermore, be readily apparent that the sensor is linear if $y \ll d$. However, the sensor sensitivity is zero if:

$$y/d = \pm i \tag{3}$$

where $i$ is any integer. In the present embodiment, a second sensor like that of Figure 2 is introduced, but its gratings 31' are so disposed that their cooperative response is $1 + \cos \pi y/d$, the two fibres being moved in common by the link rod 9. For example, as in Figures 9 and 10, consider that the grating 32 is fixed and that it cooperates with both of the movable gratings 31, 31'. When the sensor channel associated with the grating 31 has a zero light transmission response, the second sensor channel associated with the grating 31' has a maximum light transmission response. It is seen that the information propagating through the two channels may be subjected to time delay multiplexing and to whatever additional conventional data processing may be required. It is seen that the gratings 31, 31' may actually be one continuous grating, since the fibres 6, 6' move together, and that the gratings 31, 31' are slanted with respect to grating 32 by a small angle β for effecting the desired phase quadrature output. Angle β is such as to produce a one half stripe shift between the arrays in the areas of the fibres. If $f$ is the fibre diameter, then:

$$\beta = d/2f \tag{4}$$

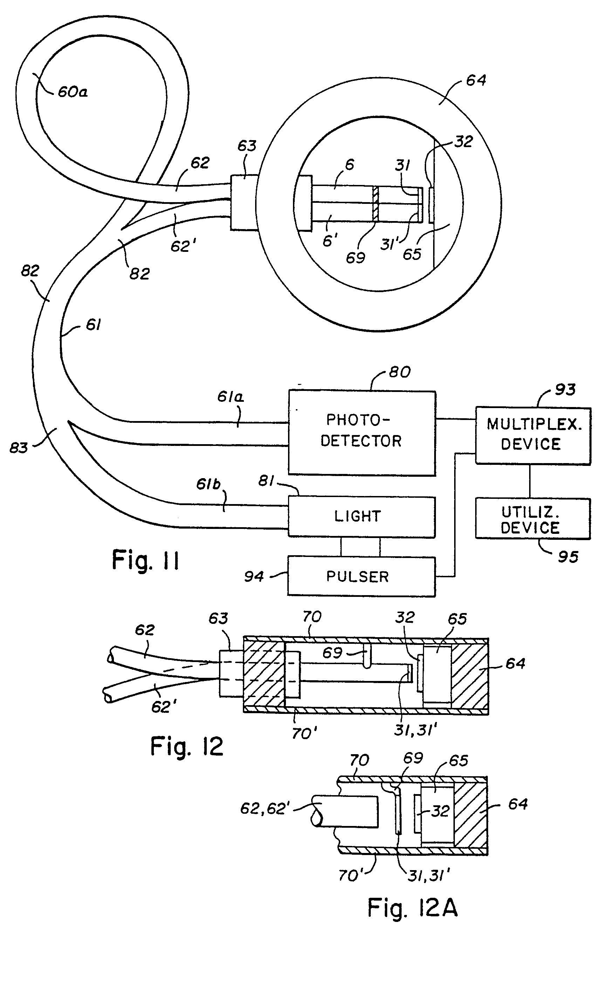

Suppose such a phase quadrature sensor, as will be further described in connection with Figures 11 and 12, is excited by an acoustic wave at link rod 9 that causes a displacement y of the fibre guide end:

$$y = a \cos(\omega t) \tag{5}$$

where $a \ll S$, and that a static displacement Y is caused by the steady pressure head of the associated medium. Then the outputs of the two channels of the sensor combination are:

$$I_1 \sim 1 + \cos[(\pi/S)(Y + a \cos(\omega t))] \tag{6}$$

$$I_2 \sim 1 + \sin[(\pi/S)(Y + a \cos(\omega t))] \tag{7}$$

For the normal condition, a $\ll S$, so that Equations (6), (7) may be simplified:

$$I_1 \sim 1 + \cos\ (\pi Y/S) - (\pi\ a/S)\ \sin\ (\pi Y/S)\ \cos\ \omega t \qquad (8)$$

$$I_2 \sim 1 + \sin\ (\pi Y/S) - (\pi a/S)\ \cos\ (\pi Y/S)\ \cos\ \omega t \qquad (9)$$

In the latter equations, the terms $1 + \cos\ (\pi Y/S)$ and $1 + \sin\ (\pi\ Y/S)$ suffice to determine Y modulo 360°, being static or pressure head terms. Once Y is determined, the alternating or acoustic portion of the signals $I_1$ and $I_2$ may be divided by $\sin\ (\pi\ Y/S)$ and $\cos\ (\pi\ Y/S)$ to get $(\pi\ a/S)$ unambiguously.

A more complete visualisation of the configuration shown in Figure 9 is afforded in Figures 11 and 12 using the reflective mode in accordance with the present invention. In Figure 11, the opposed diaphragms 70, 70' of Figure 12 having been removed, the side-by-side disposition of the fibre guides 6, 6' is readily seen. The movable ends of the fibre guides 6, 6' are provided with the common grating 31, 31' and are moved in common by link rod 69 and flexible diaphragm 70. The alternative disposition of gratings shown in Figure 4 may be used. The fibre guides 6, 6', both pass in sealed relation through a ferrule 63 mounted in casing 64. The extension 62 of the fibre optic guide 6 includes a delay section 60a before it joins at Y-coupler 82 the extension 62' of the fibre optic guide 6' to form a single guide 61 conveying data to a suitable multiplexer and data processing and utilisation system. In the embodiments of Figs. 11, 12 and 12A a reflection grating array at 32 is affixed to the flat surface of the insert 65. In this manner, light input and output signals pass in and out only through one side of the casing 64. The combined return signal found within the guide 61 and then guide 61a is first detected by photodetector 80, whose output is then processed as follows before application to a utilisation device 95 such as an oscillograph plotting signal amplitude versus time, for example. For optical excitation of the device, a light source 81 is coupled by guide 61b by a Y-junction 83 to the common guide 61.

In more detail, the device of Figures 11 and 12 functions as follows. The light source 81 emits pulses of duration $\pi$ followed by periods T during which no light is produced, being under the control of an appropriate pulser 94. These light pulses are injected into the common fibre guide 61 by the Y-coupler 83 and are sent via the fibre guide 61 into the sensor. The train of input light pulses is split equally by Y-coupler 82 so that the half of the light is modulated by the grating pair 31', 32 and half is later modulated by the grating pair 31, 32. Input pulses to be reflected at the gratings 31, 32 arrive back at the Y-coupler 83 later than the pulses reflected at the gratings 31', 32 by a time delay $t = 2sn_L/C$. Here $s$ is the effective length of delay loop 60a, $n_L$ is the index of refraction of the glass of the loop 60a, and $c$ is the velocity of light therewithin. If the time delay $t > \tau$, two fully resolved pulses are propagated back towards the photodetector 80, one pulse whose intensity is proportional to Equation (6) and one pulse whose intensity is proportional to Equation (7). These two pulses, after being received through the Y-junction 83 by the photodetector 80 may be time-division multiplexed, as aforementioned, by a conventional multiplexer under control of the synchronising pulser 94 and photodetector 80, providing a plurality of outputs supplied by a plurality of leads coupled to the conventional utilisation apparatus 95 for processing in the conventional manner.

As is also the case in other embodiments in this disclosure, it will be understood that in Figure 12A and two or more fibre optical guides 62, 62' may be held stationary be ferrule 63 within the casing and that the gratings 31, 31' may be moved with respect to the fixed slanted grating 32. The link rod 69 is now provided to move grating or gratings 31, 31' vertically in response to pressure or other changes coupled through the diaphragm 70 and linking rod 69, for example.

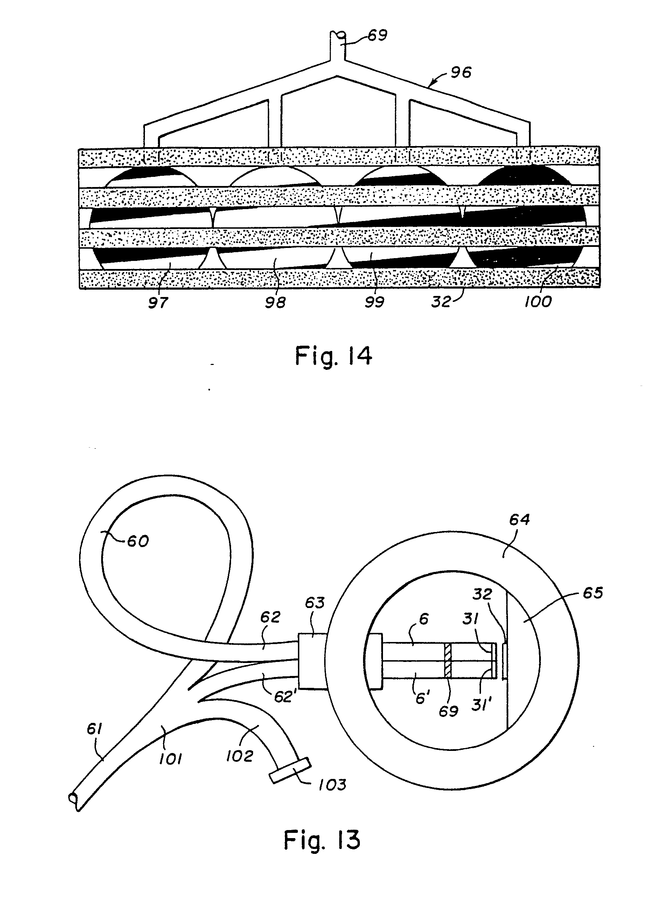

In the alternative form of Figure 11 shown in Figure 13, similar structures are disclosed with the exception that a branching fibre 102 coupled by the triple junction or splitter 101 to guide 61 is provided. At its end, a reflecting mirror 103 is located. Pulses of light thus reflected back into the fibre guide 61 may be detected by the photodetector 80 of Figure 11 and used as reference pulses in the operation of a conventional keyed multiplexer 93. Self-synchronising multiplexer apparatus may alternatively be used. The three-way splitter 101 provides the further branching fibre 102 for the guide 61. The fibre guide 102 provides a reflected reference level signal for the photodetector 80 in view of the reflecting mirror 103. The reflected reference signal may be used in dividing out and thus eliminating from consideration non-acoustically produced light signal variations; i.e. multiplicative factors not explicity contained in Equations (6) and (7).

It will also be understood that other multiterminal multiplexer apparatus may be employed with the present sensors.

In the apparatus of Figures 9 to 13, any event causing variation in the detector output or the light source 81, varying optical losses, changes in circuit gain, and the like contributes fractional uncertainties in the static terms of Equations (8) and (9). Where static terms must be measured precisely, it is preferable to avoid such problems by using differential measurement techniques. For example, the device of Figure 14 employs four fibre light guides 97 to 100 in a configuration generally similar to that of Figure 9 and where ends of the light guides are simultaneously moved by a mechanical link rod 69 via its branching extensions 96. Although not specifically shown, each of the four guide extensions differs in length so as to create unique time delays between the light source pulses and the four pulses received from each modulating guide of the device as shown generally in Figure 14. Also, the grating common to the free ends of the light guides 97 to 100 is again tilted by the aforementioned angle $\beta$ with respect to the fixed grating 32, which may be a reflection grating. A single photodetector and multiplexer device may be employed and a single light source in a system generally similar to that of Figure 11, except that now four distinct delays are required.

It is again assumed in Figure 14 that the free ends of the light guides or the gratings themselves undergo a static displacement Y and an acoustic wave displacement y=a cos ωt. The stripe-to-stripe width (Figure 3) of the grating is taken to be S and the gratings 31, 32 are sufficiently separated that a sine-like response is achieved as a function of grating displacement y. For the four-fibre hydrophone of Figure 14, the signal levels returned to the photodetector 80 are:

$$I_1 = E(1 + \sin(\pi(y+Y)/D)) \qquad (10)$$

$$I_2 = E(1 - \sin(\pi(y+Y)/D)) \qquad (11)$$

$$I_3 = E(1 + \cos(\pi(y+Y)/D)) \qquad (12)$$

$$I_4 = E(1 - \cos(\pi(y+Y)/D)) \qquad (13)$$

Combining Equations (10) and (11) and then combining Equations (12) and (13) yields the identities:

$$A \equiv (I_1 - I_2)/(I_1 + I_2) = \sin(\pi(y+Y)/D) \qquad (14)$$

$$B \equiv (I_3 - I_4)/(I_3 + I_4) = \cos(\pi(y+Y)/D) \qquad (15)$$

Set:
$$\sin \pi Y/D \equiv F \qquad (16)$$

$$\cos \pi Y/D \equiv C \qquad (17)$$

Also, assuming Y/D≪1 and small angles, well known trigonometric identifies yield:

$$A \equiv F + \pi y C/D \qquad (18)$$

$$B \equiv C - \pi y F/D \qquad (19)$$

Multiply Equation (18) by the factor C and Equation (19) by the factor F. Subtracting one from the other results in

$$\frac{\pi y}{D}(C^2 + F^2) = AC - BF \qquad (20)$$

Use of Equations (16) and (17) with trigonometric identities shows that the factor $(C^2+F^2)$ of Equation (20) is equal to unity. Because y in Equations (7) and (8) is a signal at an acoustic frequency; i.e. 100 Hz to 2KHz, the value F represents the value of A when passed through a low pass filter, while the value C represents the value of B when passed through a low pass filter.

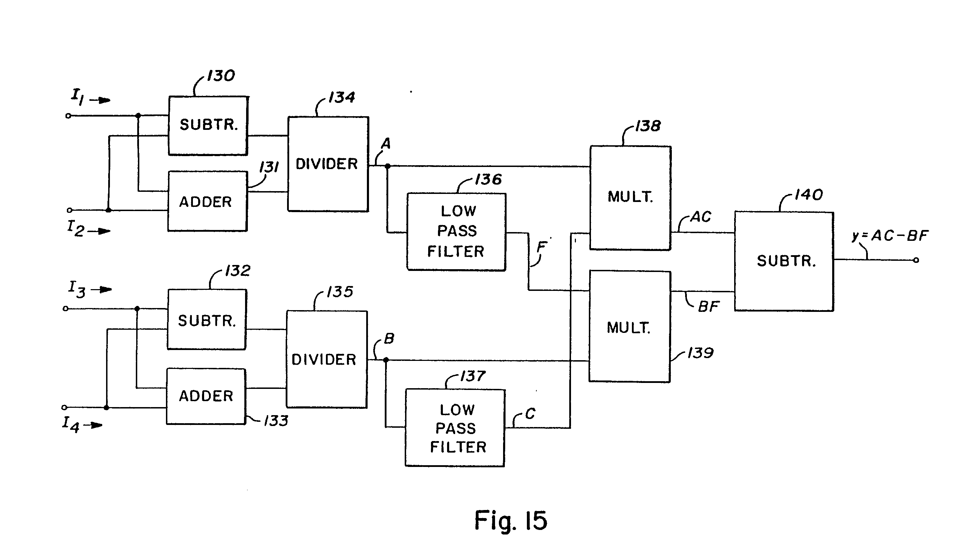

Accordingly, the desired acoustic output signal is derived, for example, using the apparatus of Figure 15. It is assumed that the signals $I_1$, $I_2$, $I_3$, and $I_4$ are derived as individual signals by multiplexing or by the use of four discrete photodetectors in cooperation with the quadruple grating and fibre systems of Figure 14. The signals $I_1$ to $I_4$ may be processed using analog or digital elements, as desired.

In the system of Figure 15, Equation (20) is solved first by subtracting the value $I_2$ from the value $I_1$ in a conventional subtracter circuit 130. Likewise, the sum $I_1 + I_2$ is obtained from a conventional adder circuit 131. The difference value from the circuit 130 is divided by the sum value from the circuit 131 in the conventional divider circuit 134 to produce signal A. Next, the value $I_4$ is subtracted from the value $I_3$ in a subtracter circuit 132 similar to the subtracter circuit 130 and $I_3$ and $I_4$ are added in an adder circuit 133 similar to the adder circuit 131. The difference value from the circuit 132 is divided by the sum value from the circuit 133 in a divider circuit 135 similar to the divider circuit 134 to produce signal B. A pair of similar conventional multipliers 138, 139 is provided. A direct input to the multiplier 138 is the value A, while the other is the filtered, low frequency value C obtained by passing value B through low pass filter 137. A direct input to the multiplier 139 is the value B, while the other is the filtered, low frequency value F obtained by passing the value A through low pass filter 136. The respective outputs AC and BF of multipliers 138, 139 are subtracted in a conventional subtraction device 140 to yield the desired output

$$\frac{\pi y}{D} = AC - BF.$$

9

While it is convenient to use four fibre guides as in Figure 14, it should be understood that only three simultaneously driven optical fibres are needed to define the desired output signals.

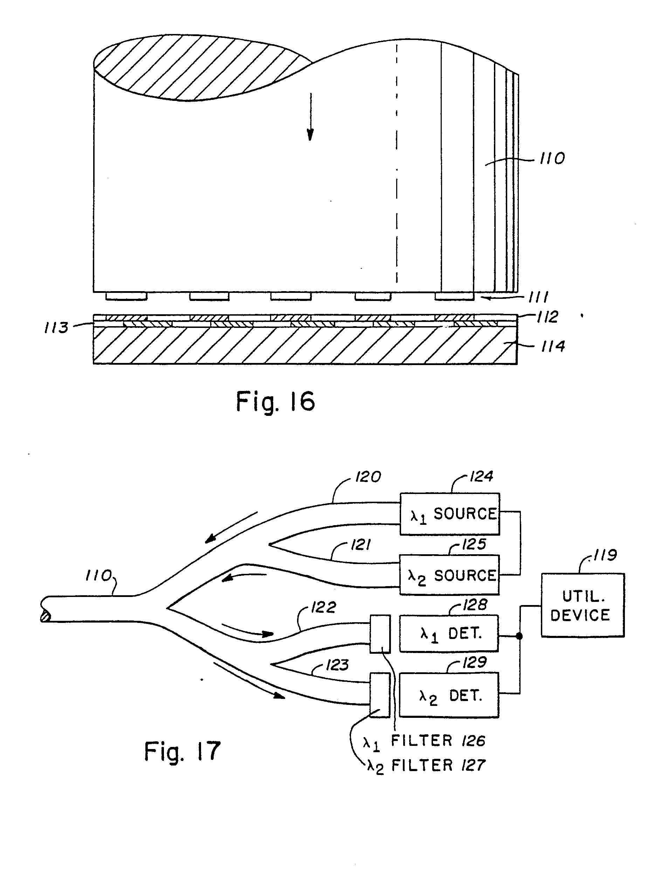

A further embodiment of the invention employing the phase quadrature effect uses a single fibre guide 110 as illustrated in Figure 16 with wave length multiplexing; i.e., two light sources emitting different wave lengths. The fibre guide 110 is supplied at its free end with a regular grating array 111 of stripes which are light absorbing. The equal-width intervening stripes are light transmitting. Spaced apart and normally parallel to the grating array 111 is a composite grating mounted on a mirror substrate 114. Affixed to the face of the mirror substrate 114 is a first regular array 113 formed of stripes of a first absorbing material with intervening transparent stripes. Affixed to the face of the array 113 is a second regular array 112 formed of stripes of a second absorbing material with intervening reflector stripes. The array 112 is displaced by the distance d/2 with respect to the array 113. The array 112 absorbs at wave length $\lambda_1$, while the array 113 absorbs at a separated $\lambda_2$. The narrow band absorbing filter array 112 lies in a regular manner just opposite the pattern of stripes on the guide 110 when the latter is at rest. As in the previously discussed embodiments, it may be preferred that the fibre guide 110 is rigidly fixed with respect to the instrument casing, and that one or the other or both of the grating systems be translated according to the parameter to be measured. The substrate 114 may be translated, thus translating the grating arrays 112, 113. The grating array 111 may be mounted on a transparent substrate and thus made movable independent of the fibre guide 110.

The two mutually spatially offset colour filter arrays 112, 113 are deposited in a phase quadrature relationship on the backing mirror substrate 114. Also, one colour ($\lambda_1$) produces the desired $1+\cos(\pi Y/d)$ signal and the other colour ($\lambda_2$) produces the $1+\sin(\pi y/d)$ signal, as shown in Figure 17. In more detail, it is seen in Figure 17 that light sources 124, 125 operate at distinct optical wave lengths $\lambda_1$ and $\lambda_2$ and respectively feed light through guides 120, 121 and through Y-couplers into the guide 110 itself. Signals modified by the interactions of grating arrays 111, 112, 113 return through the fibre guide 110 and successive Y-couplers to optical fibre guides 122, 123 capped respectively by $\lambda_1$ and $\lambda_2$ narrow pass band filters 126, 127 so that only $\lambda_1$ energy is injected into $\lambda_1$ photodetector 128 and only $\lambda_2$ energy is injected into $\lambda_2$ photodetector 129. The detected signals may be manipulated in the conventional manner in utilisation equipment 119.

Accordingly, it is seen that the invention may be used to provide opto-electronic transducer means for converting small displacement, pressure changes, or the like, into optical intensity or phase variations and then, if desired, into varying electric currents. The required tolerance of alignment of the cooperating fibres is readily reduced by a factor of one hundred, thus greatly decreasing manufacturing cost. In a typical design, sensitivity is increased by 30 dB. A sensor constructed according to the present invention may demonstrate an acoustic sensitivity greater than is available in the prior art single-mode fibre device and, at the same time, may retain other beneficial features inherent in propagation in large area, large numerical aperture, multimode optical fibre wave guides. The multimode fibres used also permit use of low cost electroluminescent light sources and readily available connector technology.

Other aspects of the described embodiments are disclosed and claimed in co-pending European Patent Application EP—A—34668 from which the present Application is divided.

**Claims**

1. An optical transducer including mounting means (64), pressure sensing means (70) coupled to the mounting means, and at least first and second optical waveguide means (6, 6') of circular cross-sections of diameter f and having side-by-side parallel axes, and first and second coplanar ends perpendicular to the axes, modulation means (31, 31', 32) coupled to the pressure sensing means for amplitude modulating optical signals propagating through the ends of the at least first and second optical waveguide means in accordance with pressure applied to the pressure sensing means, and means (80) coupled to the at least first and second optical waveguide means for receiving the amplitude modulated light signals, characterised in that the modulation means includes reflective grating array means (32) having a plurality of reflective stripes each having a width d and spaced apart by an absorptive stripe also of width d, and reflective and absorptive stripes of the grating array means (32) being offset by an angle B given by

$$B = d/2f$$

the reflective grating array means (32) being affixed to the mounting means and spaced in parallel relationship with the coplanar ends to form a gap, and in that the modulation means further includes grating means (31, 31') interposed within the gap and having a plurality of absorptive stripes and a substantially similar plurality of transparent stripes, the absorptive and transparent stripes of the array means (31, 31') each having the same width d, arranged to form an alternating pattern of absorptive and transparent stripes, and being offset by the angle B.

2. An optical transducer according to claim 1, characterised in that the modulation means further includes suspension means (69) adapted to permit relative displacement between the reflective grating array means (32) and the grating means (31, 31'), and source means (81, 94) for coupling light into the at

10

least first and second optical waveguide means (6, 6') for reflection at the reflective grating array means (32).

3. An optical transducer according to claim 1 or 2, characterised in that the reflective array means and the grating array means are disposed in mutually offset relation in the unexcited state of the transducer means.

4. An optical transducer means according to any of the preceding claims, characterised in that at least the first optical waveguide means (6) comprises multimode optical fibre waveguide means.

5. An optical transducer according to any of the preceding claims, characterised in that corresponding opposed ones of the absorptive stripes of the reflective array means (32) and the absorptive array means overlap by one half the absorptive stripe width when viewed along the parallel axes in the unexcited state of the transducer means.

6. An optical transducer according to any of the preceding claims, characterised in that the at least first and second optical waveguide means includes at least first and second optical waveguide means extensions (62, 62') passing through the mounting means (64) at a region of entry in substantially parallel relation to enter a closed cavity within the mounting means wherein the optical waveguide means extensions have substantially coplanar ends, and the modulation means includes reflective grating array means (32) affixed within the closed cavity means opposite the region of entry at a distance from the coplanar ends to form a gap therebetween, absorptive grating array means (31, 31') interposed within the gap in spaced parallel relation whith the reflective grating means (32) and the coplanar ends, suspension means (69) coupled to the pressure sensing means and adapted to permit relative displacement between the reflective grating array means and grating array means, source means (81, 94) for feeding light into the at least first and second optical waveguide means, branching optical waveguide means coupled to the at least first and second optical waveguide means extensions (62, 62') for receiving reflected light amplitude modulated as a function of the displacement, optical delay means (60a) coupled to the first optical waveguide means extension (62), third optical waveguide means (61), first branching coupler means (82, 101) for coupling the optical delay means (60a) and the second optical waveguide means (62') to the third optical waveguide means (61), second branching coupler means (83) coupled to the third optical waveguide means (61) and having first and second branches (61b, 61a), the light source means (81, 94) being coupled to the first branch (61b), and utilisation means (80, 93, 95) coupled to the second branch (61a), for utilising the reflected, amplitude modulated light.

7. An optical transducer according to claim 6, characterised in that the light source means includes synchronising pulse generator means (94), and substantially monochromatic light source means (81) responsive to the synchronising pulse generator means (94) and coupled to the first branch (61b).

8. An optical transducer according to claim 7, characterised in that the utilisation means includes photodetector means (80) responsive to the second branch (61a), and multiplexer means (93) responsive to the photodetector means (80) and to the synchronising pulse generator means (94).

9. An optical transducer according to claim 6, characterised by the first branching coupler means (101) having a third branch (102), mirror means (103) being coupled to the third branch (102) for providing synchronising pulses within the utilisation means (95).

10. Optical transducer means according to claim 1, characterised in that the reflective grating array means (32) is affixed to the mounting means at a preselected distance from the ends of the optical waveguide means to form a gap therebetween, the grating array means (31, 31') is interposed within the gap in spaced parallel relation with the reflective grating means and the ends of the optical waveguide means, and the modulation means further includes suspension means (69) coupled to the pressure sensing means and adapted to permit relative displacement between the reflective grating array means and the grating means, pulsed source means (81, 94) for feeding light into the at least first and second optical waveguide means, and in that the transducer further includes branching optical waveguide means coupled to the at least first and second optical waveguide means for receiving reflected light amplitude modulated as a function of the displacement, and utilisation means (80, 93) for utilising the reflected, amplitude modulated light coupled to the source means (81, 94) for successively incrementally delaying each optical pulse of the pulsed source means when coupled to successive ones of the plurality of waveguide means.

11. An optical transducer according to claim 10, characterised in that the pulsed source means includes synchronising pulse generator means (94), and substantially monochromatic light source means (81) responsive to the synchronising pulse generator means (94).

12. An optical transducer according to claim 11, characterised in that the utilisation means includes photodetector means (80) responsive to optical signals incident thereto from the branching optical waveguide means, and multiplexer means (93) responsive to signals incident thereto from the photodetector means (80).

13. An optical transducer according to claim 12, characterised in that the optical transducer means further includes a plurality of at least four optical waveguide means (97 to 100) for generating first, second, third, and fourth quadrature signals representative of the displacement, the transducer means further including first computer means (130, 131, 134) responsive to the first and second quadrature signals for producing a first quotient signal, second computer means (132, 133, 135) responsive to the third and fourth quadrature signals for producing a second quotient signal, first and second low pass filter means (136, 137) respectively responsive to the first and second computer means, first and second multiplier means (138, 139), the first multiplier means (138) being responsive to the first computer means and to the second low pass filter means (137), the second multiplier means (139) being responsive to the second computer means and to the first low pass filter means (136), and subtractor means (140) responsive to the first and second multiplier means (138, 139).

14. An optical transducer according to claim 13, characterised in that the first computer means includes first subtractor means (130) and first adder means (131) jointly responsive to the first and second quadrature signals and first divider means (134) responsive to the first subtractor means (130) and the first adder means (131) for producing the first quotient signal.

15. An optical transducer means according to claim 14, characterised in that the second computer means includes second subtracter means (132) and second adder means (133) jointly responsive to the third and fourth quadrature signals, and second divider means (135) responsive to the second subtractor means (132) and the second adder means (133) for producing the second quotient signal.

16. An optical transducer including mounting means (60) and pressure sensing means (2) coupled to the mounting means, an optical waveguide (110) disposed on the mounting means (60) and having a diameter f and an end, substrate means (114) positioned opposite to the end of the optical waveguide and parallel thereto to form a gap therebetween, first grating array means (111) interposed within the gap adjacent the optical waveguide, reflective grating array means affixed to the surface of the substrate means (114) opposite the end of the optical waveguide, second grating array means (112) affixed on the reflective grating array means (113), suspension means coupled to the pressure sensing means and adapted to permit relative displacement between the first and second grating means, source means (124, 125) for coupling light into the optical waveguide, characterised in that the first and second grating array means (111, 112) include a plurality of absorptive stripes and a substantially similar plurality of transparent stripes, the absorptive and transparent stripes each having the same width d, and arranged to form an alternating pattern of absorptive and transparent stripes, the transparent and absorptive stripes being offset by an angle B given by

$$B=d/2f,$$

in that the reflective grating array means (113) has a plurality of reflective stripes each spaced apart by an absorptive stripe, the reflective and absortive stripes having the same width d and being offset by the angle B, in that the source means including light source means (124, 125) for providing substantially monochromatic radiation at first and second separated wavelengths, and in that branching optical waveguide means (122, 123) are provided for receiving reflected light amplitude modulated as a function of the displacement.

17. An optical transducer according to claim 16, characterised in that the first and second grating array means are each formed of alternate transparent and absorbing stripes of substantially equal widths and are in aligned relation when the transducer means is unexcited.

18. An optical transducer according to claim 17, characterised in that the reflective grating array means is formed of alternate absorbing and reflecting stripes of substantially equal widths.

19. An optical transducer according to claim 18, characterised in that the reflective grating array means is displaced by one half stripe width with respect to the first and second grating array means in the unexcited state of the transducer means.

20. An optical transducer according to claim 19, characterised in that the optical waveguide includes respective waveguide channels having first and second narrow pass band filters (126, 127) respectively centred at the first and second wavelengths.

**Patentansprüche**

1. Optischer Wandler mit Befestigungseinrichtungen (64), mit mit den Befestigungseinrichtungen gekoppelten Druckmeßeinrichtungen (70) und mit zumindestens ersten und zweiten kreisförmige Querschnitte mit einem Durchmesser f aufweisenden Lichtwellenleiterelementen (6, 6'), die Seite an Seite angeordnete parallele Achsen und erste und zweite koplanare Enden senkrecht zu den Achsen aufweisen, mit Modulationseinrichtungen (31, 31', 32), die mit den Druckmeßeinrichtungen für eine Amplitudenmodulation von sich durch die Enden der zumindestens ersten und zweiten Lichtwellenleiterelemente ausbreitenden optischen Signale entsprechend dem Druck gekoppelt sind, der auf die Druckmeßeinrichtungen ausgeübt wird, und mit mit den zumindestens ersten und zweiten Lichtwellenleiterelementen gekoppelten Einrichtungen (80) zum Empfang der amplitudenmodulierten Lichtsignale, dadurch gekennzeichnet, daß die Modulationseinrichtungen reflektierende Gitteranordnungselemente (32) mit einer Vielzahl von reflektierenden Streifen einschließen, die jeweils eine Breite d aufweisen und durch einen absorbierenden Streifen ebenfalls mit einer Breite d getrennt sind, wobei die reflektierenden und absorbierenden Streifen der Gitteranordnungselemente (32) um einen Winkel B versetzt sind, der durch

$$B=d/2f$$

gegeben ist, wobei die reflektierenden Gitteranordnungselemente (32) an den Befestigungseinrichtungen befestigt und mit Abstand in paralleler Beziehung zu den koplanaren Enden angeordnet sind, um einen Spalt zu bilden, und daß die Modulationseinrichtungen weiterhin Gittereinrichtungen (31, 31') einschließen, die in den Spalt eingefügt sind und eine Vielzahl von absorbierenden Streifen und eine im wesentlichen geliche Vielzahl von transparenten Streifen aufweisen, wobei die absorbierenden und transparenten Streifen der Anordnungselemente (31, 31') jeweils die gleiche Breite d aufweisen und so angeordnet sind, daß sie ein abwechselndes Muster von absorbierenden und transparenten Streifen bilden und um den Winkel B versetzt sind.

2. Optischer Wandler nach Anspruch 1, dadurch gekennzeichnet, daß die Modualtionseinrichtungen weiterhin Aufhängungseinrichtungen (69) einschließen, die eine Relativbewegung zwischen den reflektierenden Gitteranordnungselementen (32) und den Gitterelementen (31, 31') ermöglichen, und daß Quelleneinrichtungen (81, 94) zur Einkopplung von Licht in die zumindestens ersten und zweiten Lichtwellenleiterelemente (6, 6') für eine Reflektion an den reflektierenden Gitteranordnungselementen (32) vorgesehen sind.

3. Optischer Wandler nach Anspruch 1 oder 2, dadurch gekennzeichnet, daß die reflektierenden Anordnungselemente und die Gitteranordnungselemente im nichterregten Zustand der Wandleranordnung in einer gegeneinander versetzten Beziehung angeordnet sind.

4. Optischer Wandler nach einem der vorhergehenden Ansprüche, dadurch gekennzeichnet, daß zumindestens die ersten Lichtwellenleiterelemente (6) faseroptische Mehrmoden-Wellenleiterelemente umfassen.

5. Optischer Wandler nach einem der vorhergehenden Ansprüche, dadurch gekennzeichnet, daß die entsprechenden einander gegenüberliegenden absorbierenden Streifen der reflektierenden Anordnungselemente (32) und der absorbierenden Anordnungselemente einander um eine Hälfte der Breite des absorbierenden Streifens bei Betrachtung entland der parallelen Achsen im nichterregten Zustand der Wandleranordnung überlappen.

6. Optischer Wandler nach einem der vorhergehenden Ansprüche, dadurch gekennzeichnet, daß die zumindestens ersten und zweiten Lichtwellenleiterelemente zumindestens erste und zweite Lichtwellenleiterelementen-Verlängerungen (62, 62') einschließen, die durch die Befestigungseinrichtungen (64) an einem Eintrittsbereich in im wesentlichen paralleler Beziehung hindurchlaufen und in einen geschlossenen Hohlraum innerhalb der Befestigungseinrichtungen eintreten, in denen die Lichtwellenleiterelemente im wesentlichen koplanare Enden aufweisen, und daß die Modulationseinrichtungen reflektierende Gitteranordnungselemente (32), die innerhalb der geschlossenen Hohlraumeinrichtungen gegenüberliegend zum Eintrittsbereich in einen Entfernung von den koplanaren Enden befestigt sind, um dazwischen einen Spalt zu bilden, absorbierende Gitteranordnungselemente (31, 31'), die in den Spalt in mit Abstand angeordneter paralleler Beziehung zu den reflektierenden Gitterelementen (32) und den koplanaren Enden eingefügt sind, mit den Druckmeßeinrichtungen gekoppelte Aufhängungseinrichtungen (69), die so ausgebildet sind, daß sie eine Relativbewegung zwischen den reflektierenden Gitteranordnungselementen und den Gitteranordnungselementen ermöglichen, Quelleneinrichtungen (81, 94) zum Einspeisen von Licht in die zumindestens ersten und zweiten Lichtwellenleiterelemente, sich verzweigende Lichtwellenleiterelemente, die mit den zumindestens ersten und zweiten optischen Lichtwellenleiterelementen-Verlängerungen (62, 62') zum Empfang von reflektiertem Licht gekoppelt sind, das als Funktion der Relativbewegung amplitudenmoduliert ist, optische Verzögerungseinrichtungen (60a), die mit den ersten Lichtwellenleiterelementen-Verlängerungen (62) gekoppelt sind, dritte Lichtwellenleiterelemente (61), erste Verzweigungskopplereinrichtungen (82, 101) zum Koppeln der optischen Verzögerungseinrichtungen (60a) und der zweiten Lichtwellenleiterelementen-Verlängerungen (62') mit den dritten Lichtwellenleiterelementen (61), zweite Verzweigungskopplereinrichtungen (83), die mit den dritten Lichtwellenleiterelementen (61) gekoppelt sind und erste und zweite Zweige (61b, 61a) aufweisen, wobei die Lichtquelleneinrichtungen (91, 94) mit dem ersten Zweig (61b) gekoppelt sind, und Nutzeinrichtungen (80, 93, 95) einschließen, die mit dem zweiten Zweig (61a) gekoppelt sind, um das reflektierte amplitudenmodulierte Licht zu verwenden.

7. Optischer Wandler nach Anspruch 6, dadurch gekennzeichnet, daß die Lichtquelleneinrichtungen Synchronisierimpulsgeneratoreinrichtungen (94) und im wesentlichen monochromatische Lichtquelleneinrichtungen (81) einschließen, die auf die Synchronisierimpulsgeneratoreinrichtungen (94) ansprechen und mit dem ersten Zweig (61b) gekoppelt sind.

8. Optischer Wandler nach Anspruch 7, dadurch gekennzeichnet, daß die Nutzeinrichtungen Photodetektoreinrichtungen (80), die auf den zweiten Zweig (61a) ansprechen, und Multiplexvereinrichtungen (93) einschließen, die auf die Photodetektoreinrichtungen (80) und die Synchronisationsimpulsgeneratoreinrichtungen (94) ansprechen.

9. Optischer Wandler nach Anspruch 6, dadurch gekennzeichnet, daß die ersten Verzweigungskopplereinrichtungen (101) einen dritten Zweig (102) aufweisen, und daß Spiegelelemente (103) mit dem dritten Zweig (102) gekoppelt sind, um Synchronisierimpulse in den Nutzeinrichtungen (95) zu liefern.

10. Optischer Wandler nach Anspruch 1, dadurch gekennzeichnet, daß die reflektierenden Gitteranordnungselemente (32) an den Befestigungseinrichtungen in einer vorgewählten Entfernung von den Enden der Lichtwellenleiterelemente befestigt sind, um einen Spalt hierzwischen zu bilden, daß die Gitteranordnungselemente (31, 31') in dem Spalt in mit Abstand angeordneter und paralleler Beziehung mit den reflektierenden Gittereinrichtungen und den Enden der Lichtwellenleiterelemente angeordnet sind und daß die Modulationseinrichtungen weiterhin mit den Druckmeßeinrichtungen gekoppelte Aufhängungseinrichtungen (69), die eine Relativbewegung zwischen den reflektierenden Gitteranordnungselementen und den Gitterelementen ermöglichen, und impulsförmig angesteuerte Quelleneinrichtungen (81, 94) zum Einspeisen von Licht in die zumindestens ersten und zweiten Lichtwellenleiterelemente einschließen, und daß der Wandler weiterhin Zweiglichtwellenleiterelemente, die mit den zumindestens ersten und zweiten Lichtwellenleiterelementen gekoppelt sind, um reflektiertes Licht, das als Funktion der Relativbewegung amplitudenmoduliert ist, zum empfangen, und Nutzeinrichtungen (80, 93) zur Verwendung des reflektierten amplitudenmodulierten Lichtes einschließt, die mit den Quelleneinrichtungen (81, 94) gekoppelt sind, um aufeinanderfolgend inkremental jeden optischen Impuls der impulsförmig angesteuerten Quelleneinrichtungen bei der Ankopplung an aufeinanderfolgende der Vielzahl von Wellenleiterelementen zu verzögern.

11. Optischer Wandler nach Anspruch 10, dadurch gekennzeichnet, daß die impulsförmig angesteuerten Quelleneinrichtungen Synchronisierimpulsgeneratoreinrichtungen (94) und im wesentlichen monochromatische Lichtquelleneinrichtungen (81) einschließen, die auf die Synchronisierimpulsgeneratoreinrichtungen (94) ansprechen.

12. Optischer Wandler nach Anspruch 11, dadurch gekennzeichnet, daß die Nutzeinrichtungen Photodetektoreinrichtungen (80), die auf die auf sie von den Zweiglichtwellenleitereinrichtungen auftreffenden optischen Signale ansprechen, und Multiplexereinrichtungen (93) einschliessen, die auf auf sie von den Photodetektoreinrichtungen (80) auftreffende Signale ansprechen.

13. Optischer Wandler nach Anspruch 12, dadurch gekennzeichnet, daß die optischen Wandlereinrichtungen weiterhin eine Anzahl von zumindestens vier Lichtwellenleiterelementen (97—100) zur Erzeugung erster, zweiter, dritter und vierter Quadratursignale einschließen, die die Relativbewegung darstellen, daß die Wandlereinrichtungen weiterhin erste Rechnereinrichtungen (130, 131, 134), die auf die ersten und zweiten Quadratursignale zur Erzeugung eines ersten Quotientensignals ansprechen, zweite Rechnereinrichtungen (132, 133, 135), die auf die dritten und vierten Quadratursignale ansprechen, um ein zweites Quotientensignal zu erzeugen, erste und zweite Tiefpaßfiltereinrichtungen (136, 137), die auf die ersten bzw. zweiten Rechnereinrichtungen ansprechen, erste und zweite Multipliziereinrichtungen (138, 139), von denen die ersten Multipliziereinrichtungen (138) auf die ersten Rechnereinrichtungen und auf die zweiten Teifpaßfiltereinrichtungen (137) ansprechen, während die zweiten Multipliziereinrichtungen (139) auf die zweiten Rechnereinrichtungen und auf die ersten Tiefpaßfiltereinrichtungen (136) ansprechen, und Subtrahiereinrichtungen (140) einschließen, die auf die ersten und zweiten Multipliziereinrichtungen (138, 139) ansprechen.

14. Optischer Wandler nach Anspruch 13, dadurch gekennzeichnet, daß die ersten Rechnereinrichtungen erste Subtrahiereinrichtungen (130) und erste Addiereinrichtungen (131), die gemeinsam auf die ersten und zweiten Quadratursignale ansprechen, und erste Dividiereinrichtungen (134) einschließen, die auf die ersten Subtrahiereinrichtungen (130) und die ersten Addiereinrichtungen (131) ansprechen, um das erste Quotientensignal zu erzeugen.

15. Optischer Wandler nach Anspruch 14, dadurch gekennzeichnet, daß die zweiten Rechnereinrichtungen zweite Subtrahiereinrichtungen (132) und zweite Addiereinrichtungen (133), die gemeinsam auf die dritten und vierten Quadratursignale ansprechen, und zweiten Dividiereinrichtungen (135) einschließen, die auf die zweiten Subtrahiereinrichtungen (132) und die zweiten Addiereinrichtungen (133) ansprechen, um das zweite Quotientensignal zu erzeugen.

16. Optischer Wandler mit Befestigungseinrichtungen (60) und mit den Befestigungseinrichtungen gekoppelten Druckmeßeinrichtungen (2), mit einem Lichtwellenleiter (110), der auf den Befestigungseinrichtungen (60) angeordnet ist und einen Durchmesser f und ein Ende aufweist, mit Substrateinrichtungen (114), die entgegengesetzt zum Ende des Lichtwellenleiters und parallel hierzu unter Bildung eines Spaltes hierzwischen angeordnet sind, mit ersten Geitteranordnungselementen (111), die in den Spalt benachbart zum Lichtwellenleiter eingefügt sind, mit reflektierenden Gitteranordnungselementen (113), die an der Oberfläche der Substratelemente (114) gegenüberliegend zum Ende des Lichtwellenleiters angeordnet sind, mit zweiten Gitteranordnungselementen (112), die auf den reflektierenden Gitteranordnungselementen (113) befestigt sind, mit mit den Druckmeßeinrichtungen gekoppelten Aufhängungseinrichtungen, die so ausgebildet sind, daß sie einen Relativbewegung zwischen den ersten und zweiten Gitterelementen ermöglichen, mit Quelleneinrichtungen (124, 125) zur Einkopplung von Licht in den Lichtwellenleiter, dadurch gekennzeichnet, daß die ersten und zweiten Gitteranordnungselemente (111, 112) eine Vielzahl von absorbierenden Streifen und eine im wesentlichen gleiche Vielzahl von transparenten Streifen einschließen, daß die absorbierenden und transparenten Streifen jeweils die gleiche Breite d aufweisen und so angeordnet sind, daß sie ein abwechselndes Muster von absorbierenden und transparenten Streifen bilden, wobei die transparenten und absorbierenden Streifen um einen Winkel B versetzt sind, der durch

$$B = d/2f$$

gegeben ist, daß die reflektierenden Gitteranordnungselemente (113) eine Vielzahl von reflektierenden Streifen aufweisen, die jeweils durch einen absorbierenden Streifen voneinander getrennt sind, daß die

# 0 102 677

reflektierenden und absorbierenden Streifen die gleiche Breite d aufweisen und um Winkel B versetzt sind, und daß die Quelleneinrichtungen Lichtquelleneinrichtungen (124, 125) zur Lieferung einer im wesentlichen monochromatischen Strahlung bei ersten und zweiten voneinander getrennten Wellenlängen einschließen und daß sich verzweigende Lichtwellenleiterelemente (122, 123) zum Empfang von reflektiertem Licht vorgesehen sind, das als Funktion der Relativbewegung amplitudenmoduliert ist.

17. Optischer Wandler nach Anspruch 16, dadurch gekennzeichnet, daß die ersten und zweiten Gitteranordnungselemente jeweils durch abwechselnde transparente und absorbierende Streifen mit im wesentlichen gleicher Breite gebildet und miteinander ausgerichtet sind, wenn der Wandler nicht erregt ist.

18. Optischer Wandler nach Anspruch 17, dadurch gekennzeichnet, daß die reflektierenden Gitteranordnungselemente durch abwechselnde absorbierende und reflektierende Streifen mit im wesentlichen gleicher Breite gebildet sind.

19. Optischer Wandler nach Anspruch 18, dadurch gekennzeichnet, daß die reflektierenden Gitteranordnungselemente um eine halbe Streifenbreite bezüglich der ersten und zweiten Gitteranordnungselemente im nichterregten Zustand der Wandlereinrichtungen gegeneinander versetzt sind.

20. Optischer Wandler nach Anspruch 19, dadurch gekennzeichnet, daß der Lichtwellenleiter jeweilige Wellenleiterkanäle mit ersten und zweiten schmalen Bandpaßfiltern (126, 127) einschließen, deren Mittenfrequenz auf den ersten und zweiten Wellenlängen liegt.

**Revendications**

1. Transducteur optique comprenant un dispositif de montage (64), un dispositif (70) de détection de pression couplé au dispositif de montage, et au moins un premier et un second dispositif à guide d'onde optqiue (6, 6') de section circulaire de diamètre f et ayant des axes parallèles placés côte à côte, et une première et une seconde extrémité coplanaires perpendiculaires aux axes, un dispositif de modulation (31, 31', 32) couplé au dispositif de détection de pression afin qu'il module en amplitude des signaux optiques se propageant par l'intermédiaire des extrémités du premier et du second dispositif à guide d'onde optique au moins en fonction de la pression appliquée au dispositif de détection de pression, et un dispositif (80) couplé au premier et au second dispositif de guidage d'onde optique au moins afin qu'il reçoive les signaux lumineux modulés en amplitude, caractérisé en ce que le dispositif de modulation comporte un dispositif (32) à arrangement à réseau réfléchissant ayant plusieurs bandes réfléchissantes ayant chacune une largeur d et séparées par une bande absorbante ayant une largeur d, les bandes réfléchissantes et absorbantes de l'arrangement (32) à réseau étant décalées d'un angle B donné par la relation:

$$B = d/2f$$

le dispositif (32) à arrangement à réseau réfléchissant étant fixé au dispositif de montage et étant disposé parallèlement aux extrémités coplanaires et à distance de celles-ci afin qu'un espace soit formé, et en ce que le dispositif de modulation comporte en outre un dispositif à réseau (31, 31') placé dans ledit espace et ayant plusieurs bandes absorbantes et un nombre pratiquement semblàble de bandes transparentes, les bandes absorbantes et transparentes du dispositif à réseau (31, 31') ayant toutes la même largeur d, étant disposées afin qu'elles forment un dessin alterné de bandes absorbantes et transparentes, et étant décalées de l'angle B.

2. Transducteur optique selon la revendication 1, caractérisé en ce que le dispositif de modulation comporte en outre un dispositif de suspension (69) destiné à permettre un déplacement relatif du dispositif (32) à arrangement à réseau réfléchissant et du dispositif (31, 31') à réseau, et une source (81, 94) destinée à coupler de la lumière dans le premier et le second dispositif de guidage d'onde optique au moins (6, 6') afin qu'elle soit réfléchie par le dispositif à arrangement à réseau réfléchissant (32).

3. Transducteur optique selon l'une des revendications 1 et 2, caractérisé en ce que le dispositif à réseau réfléchissant et le dispositif à arrangement à réseau sont disposés en position décalée mutuellement à l'état non excité du transducteur.

4. Transducteur optique selon l'une quelconque des revendications précédentes, caractérisé en ce que le premier dispositif à guide d'onde optique au moins (6) est un dispositif à guide d'onde à fibre optique multimode.

5. Transducteur optique selon l'une quelconque des revendications précédentes, caractérisé en ce que des bandes absorbantes opposées correspondantes du dispositif (32) à arrangement réfléchissant et du dispositif à arrangement absorbant se recouvrent de la moitié de la largeur d'une bande absorbante, observée suivant des axes parallèles à l'état non excité du transducteur.

6. Transducteur optique selon l'une quelconque des revendications précédentes, caractérisé en ce que le premier et le second dispositif de guidage d'onde optique au moins comportent au moins un premier et un second prolongement de dispositif de guidage d'onde optique (62, 62') passant dans le dispositif de montage (64) dans une région d'entrée en étant sensiblement parallèles, afin qu'ils pénètrent dans une cavité fermée réalisée dans le dispositif de montage et dans laquelle le dispositif de guidage d'onde optique à des extrémités sensiblement coplanaires, et le dispositif de modulation comporte un dispositif (32) à arrangement à réseau réfléchissant fixé dans la cavité fermée en face de la région d'entrée à une

15

distance des extrémités coplanaires telle qu'un espace est formé entre eux, un dispositif (31, 31') à arrangement à réseau absorbant disposé dans l'espace parallèlement au dispositif (32) à réseau réfléchissant et aux extrémités coplanaires et à distance d'eux, un dispositif (69) de suspension couplé au dispositif de détection de pression et destiné à permettre un déplacement relatif du dispositif à arrangement à réseau réfléchissant et du dispositif à arrangement à réseau, une source (81, 94) destinée à transmettre de la lumière au moins au premier et au second dispositif de guidage d'onde optique, un dispositif de guidage d'onde optique de dérivation couplé aux prolongements du premier et du second dispositif de guidage d'onde optique (62, 62') de manière qu'il reçoive la lumière réfléchie modulée en amplitude en fonction du déplacement, un dispositif (60a) à retard optique couplé au prolongement du premier dispositif de guidage d'onde optique (62), un troisième dispositif (61) de guidage d'onde optique, un premier coupleur (82, 101) de dérivation destiné à coupler le dispositif (60a) à retard optique et le second dispositif à guide d'onde optique (62') au troisième dispositif (61) à guide d'onde optique, un second coupleur de dérivation (83) couplé au troisième dispositif (61) à guide d'onde optique et ayant une première et une seconde dérivation (61b, 61a), la source lumineuse (81, 94) étant couplée à la première dérivation (61b), et un dispositif utilisateur (80, 93, 95) couplé à la seconde dérivation (61a) et destiné à utiliser la lumière réfléchie et modulée en amplitude.

7. Transducteur optique selon la revendication 6, caractérisé en ce que la source lumineuse comporte un générateur (94) d'impulsions de synchronisation et une source (81) de lumière sensiblement monochromatique commandée par le générateur d'impulsions de synchronisation (94) et couplée à la première dérivation (61b).

8. Transducteur optique selon la revendication 7, caractérisé en ce que le dispositif utilisateur comporte un photodétecteur (80) commandé par la seconde dérivation (61a), et un multiplexeur (93) commandé par le photodétecteur (80) et par le générateur d'impulsions de synchronisation (94).

9. Transducteur optique selon la revendication 6, caractérisé en ce que le premier coupleur de dérivation (101) a une troisième dérivation (102), un miroir (103) étant couplé à la troisième dérivation (102 afin qu'il transmettre des impulsions de synchronisation au dispositif utilisateur (95).

10. Transducteur optique selon la revendication 1, caractérisé en ce que le dispositif (32) à arrangement à réseau réfléchissant est fixé au dispositif de montage à une distance prédéterminée des extrémités du dispositif à guide d'onde optique afin qu'un espace soit formé entre eux, le dispositif (31, 31') à arrangement à réseau est disposé dans cet espace parallèlement au dispositif à réseau réfléchissant et aux extrémités du dispositif à guide d'onde optique et à distance de ceux-ci, et le dispositif de modulation comporte en outre un dispositif de suspension (69) couplé au dispositif de détection de pression et destiné à permettre un déplacement relatif du dispositif à arrangement à réseau réfléchissant et du dispositif à réseau, une source pulsée (81, 94) destinée à transmettre la lumière au premier et au second dispositif à guide d'onde optique au moins, et en ce que le transducteur comporte en outre un dispositif à guide d'onde optique de dérivation couplé au moins au premier et au second dispositif à guide d'onde optique et destiné à recevoir de la lumière réfléchie modulée en amplitude en fonction du déplacement, et un dispositif utilisateur (80, 93) destiné à utiliser la lumière réfléchie et modulée en amplitude, couplée à la source (81, 94) afin que chaque impulsion optique de la source pulsée soit retardée successivement et par incrément, lorsqu'elle est couplée aux dispositifs successifs à guide d'onde.

11. Transducteur optique selon la revendication 10, caractérisé en ce que la source pulsée comporte un générateur (94) d'impulsions de synchronisation et une source (81) de lumière sensiblement monochromatique commandée par le générateur (94) d'impulsions de synchronisation.

12. Transduceur optique selon la revendication 11, caractérisé en ce que le dispositif utilisateur comporte un photodétecteur (80) commandé par des signaux optiques parvenant sur lui à partir du dispositif à guide d'onde optique de dérivation, et un multiplexeur (93) commandé par les signaux qui proviennent du photodétecteur (80).

13. Transducteur optique selon la revendication 12, caractérisé en ce que le transducteur optique comporte en outre plusieurs dispositifs à guide d'onde optique (97 à 100) en nombre au moins égal à quatre et destinés à créer un premier, un second, un troisième et un quatrième signal en quadrature, représentatifs du déplacement, le transducteur comprenant en outre un premier dispositif de calcul (130, 131, 134) commandé par le premier et le second signal en quadrature et destiné à former un premier signal de quotient, un second dispositif de calcul (132, 133, 135) commandé par le troisième et le quatrième signal en quadrature et destiné à former un second signal de quotient, un premier et un second filtre passe-bas (136, 137) commandés respectivement par le premier et le second dispositif de calcul, un premier et un second dispositif multiplicateurs (138, 139), le premier dispositif multiplicateur (138) étant commandé par le premier dispositif de calcul et par le second filtre passe-bas (137), le second dispositif multiplicateur (139) étant commandé par le second dispositif de calcul et le second filtre passe-bas (136), et un dispositif de soustraction (140) commandé par le premier et le second dispositif multiplicateurs (138, 139).

14. Transducteur optique selon la revendication 13, caractérisé en ce que le premier dispositif de calcul comporte un premier dispositif de soustraction (130) et un premier dispositif d'addition (131) commandé ensemble par le premier et le second signal en quadrature, et un premier dispositif diviseur (134) commandé par le premier dispositif de soustraction (130) et le premier dispositif d'addition (131) et destiné à former le premier signal de quotient.

15. Transducteur optique selon la revendication 14, caractérisé en ce que le second dispositif de calcul comporte un second dispositif de soustraction (132) et un second dispositif d'addition (133) commandés ensemble par le troisème et le quatrième signal en quadrature, et un second dispositif diviseur (135) commandé par le second dispositif de soustraction (132) et le second dispositif d'addition (133) et destiné à former le second signal de quotient.

16. Transducteur optique comprenant un dispositif de montage (60) et un dispositif (2) de détection pression couplé au dispositif de montage, un guide d'onde optique (110) disposé sur le dispositif de montage (60) et ayant un diamètre f et une extrémité, un substrat (114) placé en face de l'extrémité du guide d'onde optique et parallèle à cette extrémité afin qu'un espace soit formé entre eux, un premier dispositif (111) à arrangement à réseau placé dans ledit espace près du guide d'onde optique, un dispositif (113) à arrangement à réseau réfléchissant fixé à la surface du substrat (114) en face de l'extrémité du guide d'onde optique, un second disposit (112) à arrangement à réseau fixé sur le disposit (113) à arrangement à réseau réfléchissant, un dispositif de suspension couplé au dispositif de détection de pression et destiné à permettre un déplacement relatif du premier et du second dispositif à réseau, une source (124, 125) destinée à coupler de la lumière au guide d'onde optique, caractérisé en ce que le premier et le second dispositif (111, 112) à arrangement à réseau comportent plusieurs bandes absorbantes et un nombre sensiblement analogue de bandes transparentes, les bandes absorbantes et transparentes ayant toutes la même largeur d, et étant disposées afin qu'elles forment un dessin alterné de bandes absorbantes et transparentes, les bandes absorbantes et transparentes étant décalées d'un angle donné par la relation:

$$B=d/2f$$

en ce que le dispositif (113) à arrangement à réseau réfléchissant a plusieurs bandes réfléchissantes qui sont séparées les unes des autres par une bande absorbante, les bandes réfléchissantes et absorbantes ayant la même largeur d et étant décalées de l'angle B, en ce que la source comporte une source lumineuse (124, 125) destinée à transmettre un rayonnement sensiblement monochromatique à une première et une seconde longueur d'onde qui sont séparées, et en ce qu'un dispositif (122, 123) de guidage d'onde optique en dérivation est disposé afin qu'il reçoive la lumière réfléchie modulée en amplitude en fonction du déplacement.

17. Transducteur optique selon la revendication 16, caractérisé en ce que le premier et le second dispositif à arrangement à réseau sont formés chacun de bandes transparentes et absorbantes qui alternent ayant des largeurs sensiblement égales et sont alignées lorsque le transducteur n'est pas excité.

18. Transducteur optique selon la revendication 17, caractérisé en ce que le dispositif à arrangement à réseau réfléchissant est formé de bandes absorbantes et réfléchissantes qui alternent et qui ont des largeurs sensiblement égales.

19. Transducteur optique selon la revendication 18, caractérisé en ce que le dispositif à arrangement à réseau réfléchissant est décalé d'une demi-largeur de bande par rapport au premier et au second dispositif à arrangement à réseau à l'état non excité du transducteur.

20. Transducteur optique selon la revendication 19, caractérisé en ce que le guide d'onde optique comporte des canaux respectifs de guidage d'onde ayant un premier et un second filtre passe-bande étroits (126, 127) centrés respectivement sur la première et la seconde longueur d'onde.

Fig. 1

Fig. 2

Fig. 3

Fig. 4

Fig. 5

Fig. 8

Fig. 6

**Fig. 7**

**Fig. 7A**

## Fig. 9

## Fig. IO

Fig. 11

Fig. 12

Fig. 12A

69

96

97    98    99    32    100

Fig. 14

60

64

65

62    63    32

6    31

62'    6'    69    31'

61

101    102

103

Fig. 13

Fig. 15

0 102 677

Fig. 16

Fig. 17

$\lambda_1$ FILTER 126
$\lambda_2$ FILTER 127